# EUROPÄISCHE PATENTANMELDUNG

(11) **EP 1 686 305 A1**
(43) Veröffentlichungstag der Anmeldung: **02.08.2006**
(21) Anmeldenummer: 05001861.3
(22) Anmeldetag: 28.01.2005
(51) Int. Cl.: F16L 27/108

(54) **Einrichtung zum Ausgleich der Bewegung zweier miteinander druckdicht zu verbindender Rohre**

(71) Anmelder: STENFLEX Rudolf Stender GmbH, 22851 Norderstedt (DE)
(72) Erfinder: Bliefterning, Ingo Dipl.-Ing, 24558 Henstedt-Ulzburg (DE); Lang, Werner Dipl.-Ing, 23816 Leezen (DE)
(74) Vertreter: Niedmers, Ole

(57) **Zusammenfassung**

Es wird eine Einrichtung (10) zum Ausgleich der Bewegung und/oder zur Schwingungsentkoppelung zweier miteinander druckdicht zu verbindender Rohre (11, 12) vorgeschlagen, umfassend einen rohrförmig ausgebildeten Balgkörper (13), durch den ein durch die Rohre (11, 12) strömendes Medium (14) hindurchströmt, wobei der Balgkörper (13) an wenigstens einer seiner Öffnungsseiten (15; 16) mit einem um den Balgkörper (13) im wesentlichen umlaufenden Befesti-gungselement (17; 18) versehen ist, über das, den Balgkörper (13) im Bereich seiner Öffnungsseite (15; 16) wenigstens teilweise ergreifend, die Einrichtung (10) über gesonderte Verbindungsmittel (19) mit einem Befestigungskragen (20) des Rohres (11) verbindbar ist. Das Befestigungselement (17) des Balgkörpers (13) ist derart ausgebildet, daß das Befestigungselement (17) und der Befestigungskragen (20) des Rohres (11) im miteinander verbundenen Zustand spaltfrei aufeinanderliegen.

## Beschreibung

Die Erfindung betrifft eine Einrichtung zum Ausgleich der Bewegung und/oder zur Schwingungsentkoppelung zweier miteinander druckdicht zu verbindender Rohre, umfassend einen rohrförmig ausgebildeten Balgkörper, durch den ein durch die Rohre strömendes Medium hindurchströmt, wobei der Balgkörper an wenigstens einer seiner Öffnungsseiten mit einem um den Balgkörper im wesentlichen umlaufenden Befestigungselement versehen ist, über das, den Balgkörper im Bereich seiner Öffnungsseite wenigstens teilweise ergreifend, die Einrichtung über gesonderte Verbindungsmittel mit einem Befestigungskragen des Rohres verbindbar ist.

Derartigen Einrichtungen, die auch Kompensatoren genannt werden, werden in Rohrleitungssystemen von Industrieanlagen, im Schiffbau, in Kraftwerken, aber auch in der Haustechnik als zuverlässige, flexible Rohrverbindungen verwendet. Sie sind faktisch Bewegungsausgleicher und Schwingungsentkoppeler in Rohrleitungen, an Pumpen, Motoren, Turbinen, Maschinen, Apparaten und Behältern und können zugleich auch als Ausgleichselemente für Montageungenauigkeiten, als Anbauelemente in/an Amaturen oder als Wandabdichtungen an Rohrdurchführungen verwendet werden.

Einrichtungen dieser Art, im folgenden kurz Kompensatoren genannt, sind in den vielfältigsten Ausführungsformen bekannt, wobei man diese Kompensatoren grob in zwei unterschiedliche Klassen aufteilen kann. Bei der einen Art bzw. Klasse der Kompensatoren bestehen die Balgkörper aus einem schraubengangförmig oder ziehharmonikaartig gefalteten bzw. ringgewellten metallischen Balg, man spricht in diesem Fall auch von Metallbalgkompensatoren, bei der anderen Klasse bestehen die Balgkörper aus einem elastischen, nichtmetallischen Werkstoff, der prinzipiell auch schraubengangförmig oder ziehharmonikaförmig bzw. ringgewellt gefaltet ausgebildet sein kann, oder auch nur aus einem ggf. über die Strömungslänge des Balgkörpers in einem bestimmten Bereich im Durchmesser vergrößerten Körper oder auch ganz einfach aus einem lediglich rohrförmig ausgebildeten Balgkörper bestehen kann. Man spricht bei der vorgenannten zweiten Klasse von Kompensatoren einfach von sog. "Gummikompensatoren", obwohl sich zur Ausbildung des Balgkörpers dieser Klasse an sich alle geeigneten elastomeren Werkstoffe, je nach Ausgestaltung und je nach beabsichtigter Anwendung, eignen. Diese letztere Klasse der Kompensatoren ist im wesentlichen Gegenstand der Erfindung, obwohl die tragenden Prinzipien der Erfindung grundsätzlich auch auf Metallbalgkompensatoren Anwendung finden können, da der eigentliche Balgkörper hier in bezug auf die Erfindung nur bzgl. seiner jeweiligen Öffnungsseiten von erfindungsgemäßem Interesse sind, die anderen Bereiche des Balgkörpers hingegen im wesentlichen nicht, soweit in den jeweiligen beidseitigen Befestigungsbereichen Bereiche aus elastomerem Werkstoff vorhanden sind.

Wie gattungsgemäß dargestellt, bestehen die besagten Kompensatoren aus dem eigentlichen Balgkörper und jeweiligen, am Balgkörper beidseitig zu den Öffnungsseiten hin angeordneten Befestigungselementen, über die der Kompensator mit den mit dem Kompensator zu verbindenden Rohren verbunden wird, bspw. über besondere Verbindungsmittel, bspw. mit Gewindemuttern versehene Schraubbolzen, über die die Befestigungselemente mit jeweils angrenzenden Befestigungskragen der jeweiligen angrenzenden Rohre verbunden werden.

Ein wesentliches Charakteristikum dieser "Gummikompensatoren" ist, daß der Balgkörper aus elastomerem Werkstoff im Bereich seiner beiderseitigen Öffnungen, d.h. in dem Bereich, mit dem der Balgkörper über das jeweilige Befestigungselement, das quasi einen Befestigungsflansch für den Kompensator darstellt, an den jeweiligen Befestigungskragen des jeweiligen zu verbindenden Rohres angedrückt wird, wobei die Andruckkraft durch Anziehen der Verbindungsmittel über die Befestigungselemente ausgeübt wird. Im zwar montierten aber noch nicht angezogenen Zustand wird zunächst aufgrund der bisherigen Konstruktionen der Kompensatoren aus elastomerem Werkstoff ein definierter Spalt zwischen dem Befestigungselement und einem Befestigungskragen des Rohres, der ebenfalls ein flanschförmiges Element bildet, ausgebildet. Je weiter das Verbindungsmittel angezogen wird, um so stärker wird der elastomere Werkstoff des Balgkörpers an den Befestigungskragen gedrückt, der sich somit aufgrund seiner Elastizität verformt.

Es ist also zwingend, daß das Verbindungselement, in der Regel die besagte Verbindung eines Schraubbolzens mit einer Gewindemutter, mit einem genau festgelegten Anzugsmoment angedrückt werden muß, damit die für die angestrebte Dichtheit zwischen dem Kompensator und dem angrenzenden Befestigungskragen der Rohre erforderliche Verpressung an der Dichtfläche des Balgkörpers eingehalten wird. Da der elastomere Werkstoff zu Zersetzungserscheinungen neigt, d.h. eine dauerhaft plastische bzw. unelastische Verformung des elastomeren Werkstoffs fortwährend erfolgt, kommt es zu nicht mehr reversiblen Veränderungen der Dichtfläche zwischen dem Balgkörper und den Befestigungskragen der Rohre, was letztlich zu einer Undichtigkeit der Verbindung führt. Die Folge ist, daß die Schraubbolzenverbindung in regelmäßigen Abständen überprüft und nachgezogen werden muß. Würden die Schraubbolzenverbindungen nicht nachgezogen, so würde die Verbindung infolge nachlassender Verpressung des elastomeren Werkstoffs des Balgkörpers an den Dichtflächen zum Befestigungskragen der Rohre undicht.

Bei der ersten Montage oder beim Nachziehen (Wartung) der Schraubbolzen werden deshalb, wie in der Praxis beobachtet, die vom Hersteller der Kompensatoren vorgegebenen Anzugsmomente der Bolzenverbindungen regelmäßig überschritten, da es während der Montage oft an Drehmomentschlüsseln fehlt, so daß der elastomere Werkstoff des Balgkörpers an den Dichtflächen zu stark verpreßt wird, was wiederum zu Beschädigungen der Dichtflächen und letztlich auch zu einem Undichtwerden der mit dem Kompensator angestrebten Verbindung mit den angrenzenden Rohren führt. Da die Anzugsmomente der Schraubbolzen relativ gering sind, können sich die Schraubbolzen bei Vibrationen in einem Rohrleitungssystem, in das die Kompensatoren eingebaut sind, sehr leicht losrütteln, was wiederum zu Undichtigkeiten der Verbindung führt.

Die Folge ist, daß das in den Rohren und dem darin bestimmungsgemäß positionierten Kompensator strömende Medium, wenn die Verbindung aufgrund der vorangehend aufgezeigten Einflüsse undicht wird, mit hoher Geschwindigkeit und in großer Menge austreten kann, wenn das Medium bspw. unter großem Druck bis zu 25 bar durch die Rohre und den Balgkörper geleitet wird. Besonders dann, wenn es sich um ein heißes, giftiges oder chemisch aggressives Medium handelt, besteht zudem ein sehr hohes Gefährdungspotential für Personen, die sich in der Nähe aufhalten, aber auch für in der Umgebung dieser Verbindung gelagerte Güter. Da Kompensatoren der vorbeschriebenen Art oft auch in Schiffen eingesetzt werden, auf denen regelmäßig ein besonders hohes Gefährdungspotential zu erwarten ist, und nicht nur durch das in den Rohren und in dem Kompensator strömende Medium selbst, sondern auch von Außen, d.h. wenn im Falle eines Brandes in der Umgebung Flammen auftreten, können diese durch den bestimmungsgemäß vorgesehenen Spalt zwischen Befestigungselement und dem Befestigungskragen des Rohres eintreten und den elastomeren Werkstoff des Balgkörpers erreichen und zerstören, wodurch eine sehr hohe Gefährdung von Personen und Gütern entsteht, nämlich durch das dann möglicherweise in Entflammung gebrachte Medium selbst und/oder aber durch das aus dem Spalt dann austretende Medium in der Umgebung der Verbindung.

Es ist somit Aufgabe der vorliegenden Erfindung eine Einrichtung bzw. einen Kompensator der eingangs genannten Art zu schaffen, der die Nachteile der Kompensatoren, wie sie im Stand der Technik bekannt sind, nicht hat, wobei unabhängig von der Montage bzw. der Person, die die Montage durchführt, immer ein gleichmäßig fester, druckdichter Sitz des Kompensators an dem zu verbindenden Rohren erreicht wird, bei dem eine Beschädigung des elastomeren Werkstoffs im Zuge der Befestigung des Kompensators und während des bestimmungsgemäßen Einsatzes des Kompensators nicht befürchtet werden braucht, der im Bereich seiner Verbindung mit den Rohren flammsicher gegen äußere Einflüsse ist und einen fortwährend sicheren Sitz im eingebauten Zustand hat, so daß ein Nachstellen von Befestigungsmitteln während des bestimmungsgemäßen Einsatzes grundsätzlich nicht erforderlich ist, wobei für den Kompensator die an sich bekannten Konstruktionsprinzipien für Kompensatoren beibehalten wurden und der Kompensator einfach und kostengünstig herstellbar ist.

Gelöst wird die, Aufgabe gemäß der Erfindung dadurch, daß das Befestigungselement des Balgkörpers derart ausgestaltet ist, daß das Befestigungselement und der Befestigungskragen des Rohres im miteinander verbundenen Zustand spaltfrei aufeinanderliegen.

Vorangestellt sei, daß der Befestigungskragen des Rohres, der regelmäßig einen Befestigungsflansch darstellt, einen kragenförmig, von der gedachten Rohrachse im wesentlichen rechtwinklig abstehenden, um das Rohr herumlaufenden Steg bildet. Diese Befestigungskragen oder Befestigungsflansche an den Rohren sind Standardkonstruktionen an mit Kompensatoren zu verbindenden Rohren.

Der Vorteil der erfindungsgemäßen Lösung ist der, daß das Befestigungselement, das den Balgkörper im Bereich seiner Öffnung wenigstens teilweise ergreift, in Verbindung mit dem Balgkörper derart ausgestaltet ist, daß dann, wenn das Befestigungselement über Verbindungsmittel wie Schraubenbolzen mit Muttern, die über einen Teilkreis um das Befestigungselement herum durch entsprechend ausgebildete Löcher und entsprechend im Befestigungskragen ausgebildete Löcher hindurchgreifen, angezogen werden, in der bestimmungsgemäßen Endstellung derart unter Einschluß des entsprechend ausgebildeten Öffnungsbereiches des Balgkörpers aufeinanderliegen, daß das Befestigungselement und Befestigungskragen in miteinander in Endstellung verbundenem Zustand spaltfrei aufeinanderliegen. Dadurch ist im sog. Kraftnebenschluß eine Abdichtung zwischen Rohr und Kompensator geschaffen, bei dem im Bereich der Öffnungsseite des elastomeren Balgkörpers, wenn das Befestigungselement und der Befestigungskragen aufeinanderliegen, einer genau definierten Verpressung unterzogen sind, wodurch nachteilige Setzerscheinungen bzw. Formänderungen des Werkstoffs des Balgkörpers im plastischen Bereich vermieden werden.

Ein weiterer Vorteil der erfindungsgemäßen Lösung ist, daß das Anzugsmoment im Zuge der Verspannung der Verbindungsmittel nicht exakt eingehalten werden muß, was zur Vermeidung von Montagefehlern von außerordentlicher Bedeutung ist. Die Verbindungsmittel müssen lediglich derart stark angezogen bzw. verspannt werden, daß das Befestigungselement und der Befestigungskragen auf Block verspannt sind. Die Verbindungsmittel, bspw. besagte Schraubenbolzen, können bis an ihre Belastungsgrenze angezogen werden, denn wenn das Befestigungselement und der Befestigungskragen auf Block verbunden sind, hat eine weitere Steigerung des Anzugsmomentes keinen Einfluß mehr auf die Verpressung der Dichtflächen des Befestigungselementes und des Befestigungskragens. Die überschüssigen Kraft wird über die gegenseitigen Berührungsflächen übertragen, wobei Beschädigungen der Dichtfläche des Balgkörpers durch eine unkontrollierte plastische Verformung aufgrund hoher Anzugsmomente bei der Montage des Kompensators sicher verhindert wird.

Auch während des bestimmungsgemäßen Einsatzes des Kompensators ist es nicht nötig, die Verbindungselemente nachzuziehen, da sich der elastomere Werkstoff des Balgkörpers, der in definiertem aber dichtendem Abstand zum Befestigungskragen gehalten wird, nicht mehr setzen, d.h. nicht mehr plastisch verformen kann. Die Montagezeiten des erfindungsgemäßen Balgkörpers verringern sich durch die erfindungsgemäß vorgeschlagene Lösung um mehr als 50 %, wobei der Kompensator aufgrund der erfindungsgemäßen Lösung weitgehend wartungsfrei und anwendungssicher ist und ein Losrütteln während des bestimmungsgemäßen Einsatzes nicht zu befürchten ist.

Gemäß einer vorteilhaften Ausgestaltung der Erfindung weist das nach Art eines Flansches ausgebildete Befestigungselement an der dem Befestigungskragen zugewandten Seite eine umlaufende nutartige Vertiefung auf, in der ein im Bereich der Öffnungsseite des Balgkörpers von diesem in Richtung des Befestigungselementes vorstehender Vorsprung aufgenommen wird. Diese Ausgestaltung des Befestigungselementes und des Balgkörpers hat den Vorteil, daß im miteinander verbundenen Zustand des Befestigungselementes und des Befestigungskragens der Balgkörper in diesem Bereich definiert eingeklammert ist, d.h. auch eine radiale Bewegung des Balgkörpers im miteinander verspannten Zustand des Befestigungselementes und des Befestigungskragens ausgeschlossen ist, da der Eingriff in die nutartige Vertiefung des Balgkörpers ebenfalls definiert erfolgt und auch in diesem Bereich eine plastische Verformung des elastomeren Werkstoffs des Balgkörpers ausgeschlossen ist, wodurch die Dichtsicherheit des Balgkörpers und sein Sitz nochmals erhöht wird.

Gemäß einer weiteren vorteilhaften Ausgestaltung der Erfindung sind die Bodenkanten der nutartigen Vertiefung abgerundet ausgebildet, so daß dann, wenn der Vorsprung im Bereich des Eingriffs in die nutartige Vertiefung im Querschnitt im wesentlichen halbkreisförmig ausgebildet ist, im nicht miteinander verbundenen Zustand des Befestigungselementes und des Befestigungskragens Hohl räume in der Nut im jeweiligen Kantenbereich bestehen, so daß im nicht miteinander verbundenen Zustand die beiderseitigen gegenüberstehenden Flächen des Befestigungselementes und des Befestigungskragens um einen definierten Betrag voneinander abstehen, wobei im miteinander bestimmungsgemäß verbundenen Zustand der um diesen Betrag vorstehende Vorsprung in die Hohlräume in der Nut eingepreßt wird, so daß eine genau definierte Vorspannung des elastomeren Werkstoffs des Balgkörpers in diesem Verbindungsbereich erfolgt und auch in diesem Verbindungsbereich eine unkontrollierte plastische Verformung ausgeschlossen ist.

Gemäß einer weiteren anderen vorteilhaften Ausgestaltung der Erfindung weist das Befestigungselement an der dem Befestigungskragen zugewandten Seite ein das Befestigungselement umlaufendes Dichtelement auf. Allgemein sein angemerkt, daß die Befestigungselemente und die Befestigungskragen bei den gattungsgemäßen Verbindungen zwischen Kompensator und Rohren eine jeweilige kreisringförmige Struktur aufweisen. Grundsätzlich sind aber kreisringförmige Konstruktionen nicht zwingend nötig, denn das erfindungsgemäße Prinzip läßt sich auch bei beliebigen anderen Strukturen der Befestigungselemente und der Befestigungskragen verwirklichen, wenn der bestimmungsgemäße Einsatz des Kompensators bzw. die Vorgaben der zu verbindenden Rohre dieses erfordern. Umlaufend im Sinne des vorangehend Gesagten ist deshalb derart gemeint, daß das Dichtelement an der Dichtungsfläche bzw. Anlagefläche zum Befestigungskragen zwischen Anfang und Ende, d.h. ohne Spalt zwischen Anfang und Ende, ausgebildet und angeordnet, unabhängig von der gewählten Form des Befestigungsmittels und des Befestigungselementes.

Bei einer bevorzugten Ausgestaltung der Erfindung wird das Dichtelement in einer im Befestigungselement umlaufend ausgebildeten zweiten nutartigen Vertiefung aufgenommen, wodurch der Sitz des Dichtelementes im Befestigungselement definiert und sicher ausgestaltet werden kann.

Das Dichtelement kann aus metallischem Werkstoff, bspw. in Form einer Konusdichtung, ausgebildet sein, das Dichtelement kann vorteilhafterweise aber auch selbst wiederum aus einem elastomeren Werkstoff, bspw. in Form eines sog. 0-Ringes, ausgebildet sein, wobei aber auch beliebige andere Querschnittsformen der metallischen Dichtung und/oder der Dichtung aus elastomerem Werkstoff denkbar sind.

Durch die vorangehend aufgeführten Maßnahmen ist es möglich, eine zusätzliche Dichtung zwischen Kompensator und den zu verbindenden Rohren zu schaffen, was bei den im Stand der Technik bekannten Kompensatoren nicht möglich war, da sich zwischen Befestigungselement des Kompensators und dem Befestigungskragen des Rohres immer ein sogar im bestimmungsgemäßen Einsatz des Kompensators vorhandener Spalt befindet, der keine definiere Spaltbreite hat.

Um die Stabilität des Balgkörpers im eingebauten Zustand des Kompensators zu erhöhen, d.h. seine Sitzstabilität in der bestimmungsgemäßen Position zu erhöhen, d.h. weitgehend unabhängig von sich verändernden Drücken des durch den Kompensators strömenden Mediums und auch Veränderungen des Außendrucks zu machen, ist der Balgkörper im Bereich der Öffnungsseite mit einem im Balgkörper umlaufenden Verstärkungselement versehen, wobei umlaufend auch hier bedeutet, daß das Ende und der Anfang des Verstärkungselementes im wesentlichen spaltfrei aneinanderstoßen.

Der Uerstärkungskörper kann vorzugsweise aus einem ringförmigen Metallkörper bestehen, es ist aber auch möglich, diesen als ringförmigen Kunststoffkörper auszubilden oder aber durch in den elastomeren Werkstoff des Balgkörpers eingelagerten textilen Werkstoff auszubilden.

Gemäß einer ganz besonders vorteilhaften weiteren Ausgestaltung der Erfindung entspricht der Innendurchmesser des Balgkörpers im wesentlichen im Bereich seiner Öffnungsseite im wesentlichen dem Innendurchmesser des angrenzenden Rohres. Dadurch wird vorteilhafterweise erreicht, daß negative Einflüsse auf das Strömungsverhalten des Mediums im Übergangsbereich zwischen Rohr und Kompensator im Bereich des Balgkörpers vermieden werden, d.h. es findet kein Durchmessersprung mehr statt, wie bei den im Stand der Technik bekannten Kompensatoren, bei denen in diesem Bereich erhebliche Druckverluste auftraten, der Fall ist.

Wie oben schon erwähnt, kann der Balgkörper, bis auf den Bereich der Öffnungsseiten, d.h. den unmittelbaren Anlage- bzw. Dichtungsbereich zum Befestigungskragen des Rohres, an sich aus beliebigem geeigneten Werkstoff bestehen, wobei es sogar denkbar ist, daß der eigentliche Balgkörper aus besagtem Metallbalg besteht, an den an dessen beiderseitigen Enden bzw. Öffnungsseiten ein elastomerer Werkstoff, bspw. Gummi, geeignet druckdicht befestigt ist, bspw. mittels Vulkanisation und dergleichen. Vorteilhaft ist es auch, den Balgkörper insgesamt aus elastomerem Werkstoff, bspw. Gummi herzustellen, da mit einer derartigen Ausgestaltung des Balgkörpers vielen möglichen Einsatzfällen des Kompensators Rechnung getragen werden kann.

Die Erfindung wird nun unter Bezugnahme auf die nachfolgenden schematischen Zeichnungen anhand eines Ausführungsbeispieles im einzelnen beschrieben.

Darin zeigen:
- Fig. 1: im Teilschnitt einen Kompensator sowie ein angrenzendes Rohr, an das der Kompensator mittels eines Verbindungsmittels in Form eines Schraubenbolzens und einer Mutter befestigt wird, wobei in dieser Figur ein Kompensator dargestellt ist, wie er bisher im Stand der Technik bekannt ist,
- Fig. 2: eine Darstellung gemäß Fig. 1, wobei der dargestellte Kompensator der Kompensator gemäß der Erfindung ist,
- Fig. 3: einen vergrößerten Ausschnitt aus Fig. 2 (linke Seite) im Schnitt zur verbesserten Darstellung des Verbindungsbereiches zwischen Befestigungselement des Balgkörpers und Befestigungskragen des Rohres.

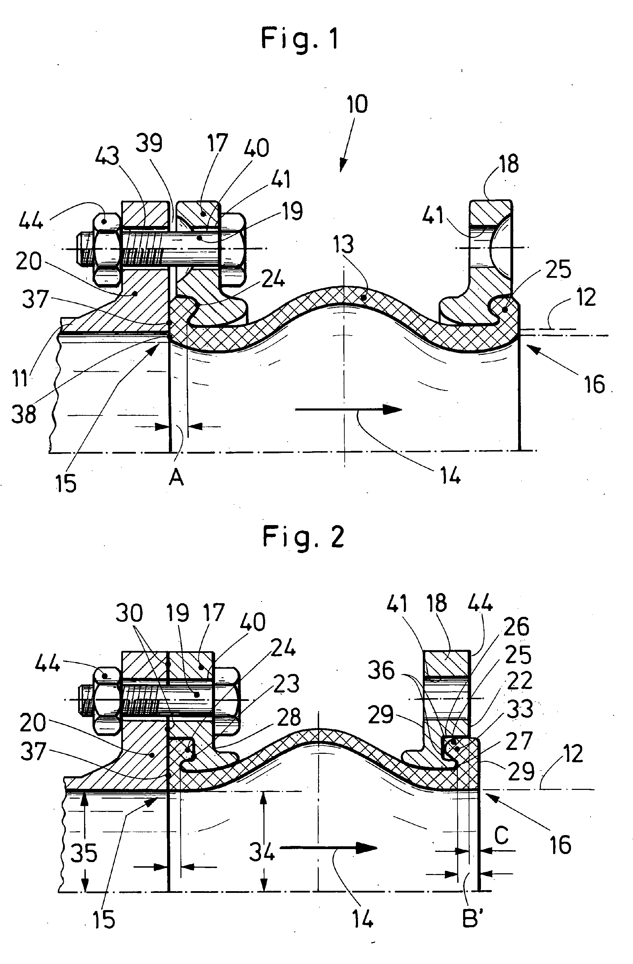

Es wird zunächst Bezug genommen auf die Darstellung von Fig. 1, in der ein Kompensator 10 im Ausschnitt und im Schnitt in Verbindung mit jeweils an den Kompensator 10 angrenzenden Rohren 11, 12 dargestellt ist. Da der bekannte Kompensator 10 ebenso wie der weiter unten beschriebene erfindungsgemäße Kompensator 10 regelmäßig beidseitig an Rohre 11, 12 angeschlossen ist, die Anschlußprinzipien aber beidseitig dieselben sind, wird nachfolgend zum Verständnis des Kompensators 10 gemäß dem Stand der Technik und zum Verständnis der Erfindung nur auf eine Verbindungsseite, in den Figuren links dargestellt, Bezug genommen.

Der Kompensator 10 gemäß Fig. 1 besteht im wesentlichen aus einem Balgkörper 13, der hier als Balgkörper 13 aus elastomerem Werkstoff. bspw. Gummi, besteht. Der den Balgkörper 13 bildenden Werkstoff wird hier bei der nachfolgenden Beschreibung als elastomerer Werkstoff bzw. Gummiwerkstoff bezeichnet. Der Aufbau des Balgkörpers 13 ist konventioneller Art und ist der Fachwelt bekannt. Insofern wird auf den Balgkörper 13 nur soweit eingegangen, wie es für die Schilderung des Standes der Technik sowie der Erfindung nötig ist.

Darüber hinaus umfaßt der Kompensator 10 beidseitig je ein Befestigungselement 17, 18, die regelmäßig konstruktiv gleich ausgebildet sind. Die Befestigungselemente 17, 18 sind regelmäßig als umlaufende Ringe ausgebildet und weisen auf einem Teilkreis des Umfanges eine Mehrzahl von Durchgangslöchern 40, 41 auf, die mit entsprechenden Durchgangslöchern 43 fluchten, die in einem Befestigungskragen 20 ausgebildet sind, mit dem die Enden der jeweiligen Rohre 11, 12, in der Fig. 1 rechts lediglich als gestrichelte Linie angedeutet, versehen sind. Die Befestigungskragen 20 bilden einen Befestigungsflansch, wobei die Verbindungsmittel 19, hier in Form von Schraubbolzen ausgebildet, mit Muttern 44 verbunden werden.

Die Befestigungselemente 17, 18 sind derart gestaltet, daß ein Vorsprung 24, der im Balgkörper 13 an den beiden Öffnungsseiten 15 und 16 ausgebildet ist und im wesentlichen parallel zu einer gedachten Achse zu dem Balgkörper ausgerichtet sind, vorsteht, so daß die jeweiligen Vorsprünge 24, 25 in entsprechend ausgeformte Bereiche der Befestigungselemente 17, 18 eingreifen und somit von den jeweiligen Befestigungselementen 17, 18 klauenartig ergriffen werden können.

Fig. 1 zeigt den Verbindungsbereich des Kompensators 10 zwischen den Befestigungselementen 17, 18 des Balgkörpers 13 und dem hier in der Darstellung einseitig angrenzenden, gegenüberliegenden Befestigungskragen 20 des Rohres 11 im montierten Zustand des Kompensators 10. Dabei ist ersichtlich, daß ein definierter Spalt 39 zwischen Befestigungselement 17 und Befestigungskragen 20 gebildet wird, der durch den axialen Abstand A definiert wird, der durch die entsprechende axiale Dicke des Balgkörpers 13 im Bereich der Öffnungsseiten 15, 16 gebildet wird. Obwohl der in Fig. 1 dargestellte Spalt 39 an sich eine definierte axiale Ausdehnung haben soll, ist erkennbar, daß durch Anziehen des Schraubbolzens 19 der an sich definiert einzuhaltende Abstand A zwischen dem Befestigungselement 17 des Balgkörpers 13 und dem Befestigungskragen 20 in Abhängigkeit der plastischen Verformbarkeit des Balgkörpers 13 aufgrund seiner Werkstoffeigenschaften verringert werden kann, je weiter der Schraubbolzen 19 angezogen wird. Aus diesem Grunde ist es zwingend erforderlich, daß bei den im Stand der Technik bekannten Kompensatoren gemäß Fig. 1 die Schraubbolzen 19 mittels eines Drehmomentschlüssels und dergleichen angezogen werden, um eine definierte axiale Breite des Spaltes 39 zu erreichen.

Die Dichtung zwischen dem Kompensator 10 und dem angrenzenden Rohr 11 bzw. dem Befestigungskragen 20 des Rohres 11 erfolgt ausschließlich über die von der Verbindung mittels der Schraubbolzen 19 aufgebrachten Kraft über die Dichtfläche 37 des Balgkörpers 13, die auf den Befestigungskragen 20 übertragen wird. Diese Kraft entspricht exakt der bei den im Stand der Technik bekannten Kompensatoren 10 erforderlichen Abdichtkraft. Eine derartige Abdichtung nennt man auch Abdichtung im Krafthauptschluß. Infolge der Eigenschaften des Werkstoffs des Balgkörpers 13 sowie in Abhängigkeit auch des durch den Balgkörper 13 strömenden Mediums 14 sowie mechanischer und temperaturbedingter Einflüsse läßt die Dichtwirkung im Bereich der Dichtfläche 37 zwischen Befestigungselement 17 und Befestigungskragen 20 nach, d.h. die Dichtung wird undicht, so daß das Medium 14 durch den Spalt 39 austreten kann. Somit müssen zur Sicherstellung der Dichtung zwischen Kompensator 10 und dem Rohr 11 die Schraubbolzen 19 nachgezogen werden, wobei sich nachfolgend im Laufe der Zeit wiederum ein Undichtwerden aufgrund der Eigenschaften des Werkstoffs des Balgkörpers 13 infolge des Setzens des elastomeren Werkstoffs einsetzt, so daß der Abstand A über die Zeit immer kleiner wird und der Kompensator 10, zumindest aber der Balgkörper 13, ausgetauscht werden müssen.

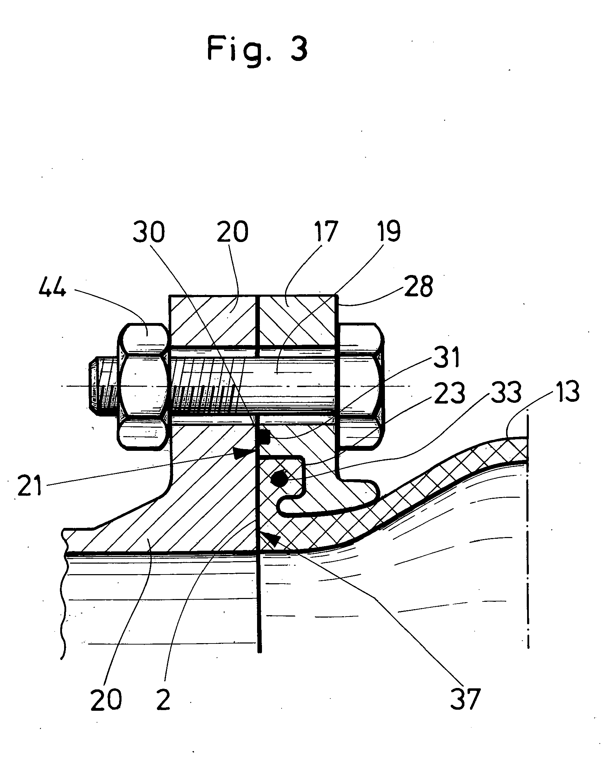

Die Darstellung des erfindungsgemäßen Kompensators 10 erfolgt anhand der Fig. 2 und 3. Der Prinzipielle Aufbau des Kompensators 10 entspricht, wie angestrebt, im wesentlichen dem des im Zusammenhang mit Fig. 1 dargestellten Kompensators 10 gemäß dem Stand der Technik. Insofern wird im Hinblick auf die Darstellung des erfindungsgemäßen Kompensators 10 lediglich auf die Unterschiede zum Kompensator 10 gemäß dem Stand der Technik eingegangen. Bei dem erfindungsgemäßen Kompensator 10 ist das Befestigungselement 17 und der Balgkörper 13 so gestaltet, daß zwischen dem Befestigungselement 17 und dem Befestigungskragen 20 im zwischen die Rohre 11, 12 montiertem Zustand des Kompensators 10 kein Spalt gebildet wird, d.h. die Verbindung zwischen Befestigungselement 17 und Befestigungskragen 20 ist in bestimmungsgemäßer Endstellung spaltfrei. Dabei wird der Kompensator beidseitig an seinen jeweiligen Öffnungsseiten 15, 16 der axiale Abstand B', vg1. Fig. 2 rechts, so bemessen, daß im nichtmontiertem Zustand des Kompensators 10 zwischen der Dichtfläche 37 des Balgkörpers 13 und dem angrenzenden Befestigungskragen (nicht dargestellt) des Rohres 12 ein Spalt C gebildet wird. Wenn die Schraubbolzen 19 dann bestimmungsgemäß angezogen werden, vgl. Fig. 2 links, daß die jeweiligen Dichtflächen 44 des Befestigungselementes 17 und des Befestigungskragens 20 aufeinanderliegen, wird der radiale Vorsprung des Balgkörpers 13 definiert aufeinandergepreßt, so daß ein definierter Abstand B zwischen dem Befestigungselement 17 und dem Befestigungskragen 20 erreicht wird. Der Abstand B ist dabei derart bemessen, daß der elastomere Werkstoff des Balgkörpers definiert verpreßt wird. Der Abstand B ist dann keinerlei Maßschwankungen unterworfen, weil das Befestigungselement 17 und der Befestigungskragen 20 auf Block angezogen sind. Die Verpressung des elastomeren Werkstoffs und die Anzugsmomente der Schraubbolzen 19 haben keinerlei Einfluß auf den Abstand B.

Die Befestigungselemente 17, 18 weisen eine umlaufende nutartige Vertiefung 23 auf. Diese nutartige Vertiefung weist einen im wesentlichen rechteckigen Querschnitt auf, wobei deren Bodenkanten 26, 27, vgl. insbesondere auch Fig. 3, abgerundet ausgebildet sind. Die nutartige Vertiefung 23 ist an der Seite des Befestigungselements 17 umlaufend ausgebildet, die auch die Dicht- bzw. Anlagefläche 44 an den Befestigungskragen 20 bildet. In die nutartige Vertiefung 23 steht ein Vorsprung 24 des Balgkörpers 13 hinein, der im wesentlichen axial vom Ende des radialen Teils der Öffnungsseite 15, 16 des Balgkörpers 13 vorsteht, vgl. insbesondere Fig. 2 rechts, in der der Vorsprung 24 in noch nicht verspanntem Zustand des Kompensator 10 mit dem angrenzenden Rohr 12 gezeigt ist. Das Ende des axialen Vorsprunges 24, das in die nutartige Vertiefung 23 hineinsteht, ist im unverspannten Zustand im wesentlichen halbkreisförmig im Querschnitt ausgebildet, im verspannten Zustand, vgl. Fig. 2 links sowie Fig. 3, füllt der elastomere Werkstoff des Vorsprungs 24 die nutartige Vertiefung 23 vollständig aus. Auch damit ist sichergestellt, daß eine genau definierte Vorspannung des elastomeren Werkstoffs des Balgkörpers 13 erfolgt und eine unkontrollierte plastische Formänderung ausgeschlossen wird. Es erfolgt ausschließlich eine kontrollierte Verformung im elastischen Bereich.

Da der Abstand B zwischen Befestigungselement 17 und Befestigungskragen 20 fortwährend definiert eingehalten wird, wenn das Befestigungselement 17 und der Befestigungskragen 20 definiert aufeinanderliegen, ist aufgrund des Vorsprunges 24 auch die Möglichkeit ausgeschlossen, daß der Vorsprung 24 aus seiner Verankerung, d.h. aus der klauenförmigen Vertiefung, wie beim Stand der Technik, vgl. wiederum Fig. 1, fortwährend zu befürchten, herausgezogen wird. Zur Erhöhung der Sicherheit vor einem Herausziehen des Vorsprunges 24 aus der nutartigen Vertiefung 23 kann der Vorsprung 24 mit einem um den Balgkörper 13 umlaufenden Verstärkungselement 33, bspw. in Form eines umlaufenden Ringes, versehen sein.

Das Befestigungselement 17 kann an der dem Befestigungskragen 20 zugewandten Seite 21 ein bzw. mehrere das Befestigungselement 17 umlaufende Dichtelemente 30 aufweisen, vgl. insbesondere Fig. 3. Das Dichtelement bzw. die Dichtelemente 30 sind in einer umlaufenden nutartigen Vertiefung 31 aufgenommen und stellen neben der eigentlichen Dichtfläche 44 zwischen Befestigungselement 17 und Befestigungskragen 20 ein zusätzliches Dichtmittel dar.

Der erfindungsgemäße Balgkörper 13 ist derart ausgestaltet, vgl. Fig. 2, daß der Innendurchmesser 34 des Balgkörpers 13, in Fig. 2 ist jeweils nur aus Vereinfachungsgründen der halbe Durchmesser dargestellt, im Bereich seiner Öffnungsseite 15 im wesentlichen dem Innendurchmesser 35 des angrenzenden Rohres 11 entspricht. Anders als bei den im Stand der Technik bekannten Kompensatoren 10 ist somit zwischen den Rohren 11, 12 und dem Balgkörper 13 kein Absatz 38 vorhanden.

### Bezugszeichenliste

- 10: Einrichtung
- 11: Rohr
- 12: Rohr
- 13: Balgkörper
- 14: Medium
- 15: Öffnungsseite (Balgkörper)
- 16: Öffnungsseite (Balgkörper)
- 17: Befestigungselement (Befestigungsflansch)
- 18: Befestigungselement (Befestigungsflansch)
- 19: Verbindungsmittel (Schraubbolzen)
- 20: Befestigungskragen
- 21: erste Seite (Befestigungselement)
- 22: erste Seite (Befestigungselement)
- 23: nutartige Vertiefung
- 24: Vorsprung
- 25: Vorsprung
- 26: Bodenkante (nutartiger Vorsprung)
- 27: Bodenkante (nutartiger Vorsprung)
- 28: zweite Seite (Befestigungselement)
- 29: zweite Seite (Befestigungselement)
- 30: Dichtelement
- 31: zweite nutartige Vertiefung
- 33: Verstärkungselement
- 34: Innendurchmesser (Balgkörper)
- 35: Innendurchmesser (Rohr)
- 36: Hohlraum
- 37: Dichtfläche
- 38: Absatz
- 39: Spalt
- 40: Durchgangsloch
- 41: Durchgangsloch
- 42:
- 43: Durchgangsloch
- 44: Mutter

## Patentansprüche

1. Einrichtung (10) zum Ausgleich der Bewegung und/oder zur Schwingungsentkoppelung zweier miteinander druckdicht zu verbindender Rohre (11, 12), umfassend einen rohrförmig ausgebildeten Balgkörper (13), durch den ein durch die Rohre (11, 12) strömendes Medium (14) hindurchströmt, wobei der Balgkörper (13) an wenigstens einer seiner Öffnungsseiten (15; 16) mit einem um den Balgkörper (13) im wesentlichen umlaufenden Befestigungselement (17; 18) versehen ist, über das, den Balgkörper (13) im Bereich seiner Öffnungsseite (15; 16) wenigstens teilweise ergreifend, die Einrichtung (10) über gesonderte Verbindungsmittel (19) mit einem Befestigungskragen (20) des Rohres (11) verbindbar ist, **dadurch gekennzeichnet, daß** das Befestigungselement (17) des Balgkörpers (13) derart ausgestaltet ist, daß das Befestigungselement (17) und der Befestigungskragen (20) des Rohres (11) im miteinander verbundenen Zustand spaltfrei aufeinanderliegen.

2. Einrichtung nach Anspruch 1, **dadurch gekennzeichnet, daß** das nach Art eines Flansches ausgebildete Befestigungselement (17) an der dem Befestigungskragen (20) zugewandten Seite (21) eine umlaufenden, nutartigen Vertiefung (23) aufweist, in der ein im Bereich der Öffnungsseite (15) des Balgkörpers (13) von diesem in Richtung des Befestigungselementes (17) vorstehender Vorsprung (24) aufgenommen wird.

3. Einrichtung nach Anspruch 2, **dadurch gekennzeichnet, daß** die nutartige Vertiefung (23) einen im wesentlichen rechteckigen Querschnitt aufweist.

4. Einrichtung nach Anspruch 3, **dadurch gekennzeichnet, daß** die Bodenkanten (26, 27) der nutartigen Vertiefung (23) abgerundet sind.

5. Einrichtung nach einem oder mehreren der Ansprüche 2 bis 4, **dadurch gekennzeichnet, daß** das Befestigungselement (17) an der dem Befestigungskragen (20) zugewandten Seite (21) ein das Befestigungselement (17) umlaufendes Dichtelement (30) aufweist.

6. Einrichtung nach Anspruch 5, **dadurch gekennzeichnet, daß** das Dichtelement (30) in einer im Befestigungselement (17) umlaufend ausgebildeten zweiten nutartigen Vertiefung (31) aufgenommen wird.

7. Einrichtung nach einem oder beiden der Ansprüche 5 oder 6, **dadurch gekennzeichnet, daß** das Dichtelement (30) aus metallischem Werkstoff ausgebildet ist.

8. Einrichtung nach einem oder beiden der Ansprüche 5 oder 6, **dadurch gekennzeichnet, daß** das Dichtelement (30) aus elastomerem Werkstoff ausgebildet ist.

9. Einrichtung nach einem oder mehreren der Ansprüche 2 bis 4, **dadurch gekennzeichnet, daß** der Balgkörper (13) im Bereich der Öffnungsseite (15) mit einem im Balgkörper (13) umlaufenden Verstärkungselement (33) versehen ist.

10. Einrichtung nach Anspruch 9, **dadurch gekennzeichnet, daß** der Verstärkungskörper (33) aus einem ringförmigen Metallkörper besteht.

11. Einrichtung nach Anspruch 9, **dadurch gekennzeichnet, daß** der Verstärkungskörper (33) aus einem ringförmigen Kunststoffkörper besteht.

12. Einrichtung nach einem oder mehreren der Ansprüche 1 bis 11, **dadurch gekennzeichnet, daß** der Innendurchmesser (34) des Balgkörpers (13) im Bereich seiner Öffnungsseite (15) im wesentlichen dem Innendurchmesser des angrenzenden Rohres (11) entspricht.

13. Einrichtung nach einem oder mehreren der Ansprüche 1 bis 12, **dadurch gekennzeichnet, daß** der Balgkörper (13) wenigstens teilweise aus elastomerem Werkstoff besteht.

14. Einrichtung nach einem oder mehreren der Ansprüche 1 bis 13, **dadurch gekennzeichnet, daß** das Befestigungselement (17) wenigstens teilweise aus metallischem Werkstoff besteht.

15. Einrichtung nach einem oder mehreren der Ansprüche 1 bis 14, **dadurch gekennzeichnet, daß** das Befestigungselement (17) wenigstens teilsweise aus metallischem und nichtmetallischem Werkstoff besteht.
